(19) Europäisches Patentamt

European Patent Office

Office européen des brevets

(11) **EP 4 422 108 A1**

(12) **EUROPEAN PATENT APPLICATION**

(43) Date of publication:
**28.08.2024 Bulletin 2024/35**

(21) Application number: **24152525.2**

(22) Date of filing: **18.01.2024**

(51) International Patent Classification (IPC):
*H04L 5/00* (2006.01)   *H04J 11/00* (2006.01)
*H04W 48/12* (2009.01)   *H04W 48/16* (2009.01)
*H04W 56/00* (2009.01)

(52) Cooperative Patent Classification (CPC):
**H04L 5/0053; H04J 11/0073; H04J 11/0076;
H04L 5/0048; H04W 48/12; H04W 48/16;
H04W 56/001**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.02.2023 US 202363448431 P**

(71) Applicant: **Nokia Technologies Oy
02610 Espoo (FI)**

(72) Inventors:
• **HAKOLA, Sami-Jukka
Kempele (FI)**
• **HOOLI, Kari Juhani
Oulu (FI)**
• **TIIROLA, Esa Tapani
Oulu (FI)**
• **HUGL, Klaus
Vienna (AT)**
• **LUNTTILA, Timo Erkki
Espoo (FI)**

(74) Representative: **Nokia EPO representatives
Nokia Technologies Oy
Karakaari 7
02610 Espoo (FI)**

(54) **FACILITATING TRANSMISSION AND RECEPTION OF MULTIPLE PUNCTURED SSB TRANSMISSIONS WITH DIFFERENT TRANSMISSION BANDWIDTHS**

(57) There is provided a user equipment apparatus that includes at least one processor and at least one memory. The memory stores instructions which, when executed by the at least one processor, cause the user equipment apparatus at least to: perform an initial cell search of one or more cells on a network, including scanning for synchronization signal block (SSB) transmissions corresponding to synchronization raster points; receive an SSB transmission associated with a synchronization raster point and with a transmission bandwidth, where a size of the transmission bandwidth is based on location of the synchronization raster point in a band having at least a first region and a second region, and where the SSB transmission includes a physical broadcast channel (PBCH); and determine a PBCH puncturing pattern for receiving the PBCH based on the size of the transmission bandwidth.

EP 4 422 108 A1

**Description**

FIELD

Various example embodiments relate generally to wireless networking and, more particularly, to synchronization signal block (SSB) transmissions in wireless networking.

BACKGROUND

Wireless networking provides significant advantages for user mobility. A user's ability to remain connected while on the move provides advantages not only for the user, but also provides greater efficiency and productivity for society as a whole. As user expectations for connection reliability, data speed, and device battery life, become more demanding, technology for wireless networking must also keep pace with such expectations. Accordingly, there is continuing interest in improving wireless networking technology.

SUMMARY

In accordance with aspects of the disclosure, a user equipment apparatus includes at least one processor and at least one memory. The at least one memory stores instructions which, when executed by the at least one processor, cause the user equipment apparatus at least to: perform an initial cell search of one or more cells on a network, where performing the initial cell search includes scanning for a plurality of synchronization signal block (SSB) transmissions corresponding to a plurality of synchronization raster points; receive an SSB transmission of the plurality of SSB transmissions, where the SSB transmission is associated with a synchronization raster point of the plurality of synchronization raster points and with a transmission bandwidth, where a size of the transmission bandwidth is based on location of the synchronization raster point in a band having at least a first region and a second region, and where the SSB transmission includes a physical broadcast channel (PBCH); and determine a PBCH puncturing pattern of a plurality of PBCH puncturing patterns for receiving the PBCH based on the size of the transmission bandwidth. The transmission bandwidths in the band include at least a first size and a second size larger than the first size. The plurality of PBCH puncturing patterns includes at least a first PBCH puncturing pattern and a second PBCH puncturing pattern, where the first PBCH puncturing pattern has a greater amount of puncturing than the second PBCH puncturing pattern.

In aspects of the user equipment apparatus, the plurality of PBCH puncturing patterns may include a predefined set of PBCH puncturing patterns.

In aspects of the user equipment apparatus, in determining the PBCH puncturing pattern, the instructions, when executed by the at least one processor, may further cause the user equipment apparatus at least to: determine that the synchronization raster point is in the first region of the band and the size of the transmission bandwidth is the first size; and based on determining that the synchronization raster point is in the first region of the band and the size of the transmission bandwidth is the first size, determine that the PBCH puncturing pattern is the first PBCH puncturing pattern of the plurality of PBCH puncturing patterns.

In aspects of the user equipment apparatus, in determining the PBCH puncturing pattern, the instructions, when executed by the at least one processor, may further cause the user equipment apparatus at least to: determine that the synchronization raster point is in the first region of the band and the size of the transmission bandwidth is the second size; and based on determining that the synchronization raster point is in the first region of the band and the size of the transmission bandwidth is the second size, determine that the PBCH puncturing pattern is the second PBCH puncturing pattern of the plurality of PBCH puncturing patterns.

In aspects of the user equipment apparatus, in determining the PBCH puncturing pattern, the instructions, when executed by the at least one processor, may further cause the user equipment apparatus at least to: determine that the synchronization raster point is in the second region of the band; and based on determining that the synchronization raster point is in the second region of the band, determine that the PBCH puncturing pattern is the second PBCH puncturing pattern of the plurality of PBCH puncturing patterns.

In aspects of the user equipment apparatus, in determining the PBCH puncturing pattern, the instructions, when executed by the at least one processor, may further cause the user equipment apparatus at least to: determine that the synchronization raster point is in the second region of the band and the size of the transmission bandwidth is the second size; and based on determining that the synchronization raster point is in the second region of the band and the size of the transmission bandwidth is the second size, determine that the PBCH puncturing pattern is a third PBCH puncturing pattern of the plurality of PBCH puncturing patterns, and where the third PBCH puncturing pattern includes a same amount of puncturing as the second PBCH puncturing pattern but has a different pattern of puncturing than the second PBCH puncturing pattern.

In aspects of the user equipment apparatus, in determining the PBCH puncturing pattern, the instructions, when executed by the at least one processor, may further cause the user equipment apparatus at least to: determine that the synchronization raster point is in the second region of the band and the size of the transmission bandwidth is the first size; and based on determining that the synchronization raster point is in the second region of the band and the size of the transmission bandwidth is the first size, determine that the PBCH puncturing pattern is a fourth PBCH puncturing pattern of the plurality of PBCH puncturing patterns, and where the fourth PBCH puncturing pattern includes a same amount of puncturing as the first PBCH puncturing pattern but has a different pattern of puncturing than the first PBCH puncturing pattern.

In aspects of the user equipment apparatus, the instructions, when executed by the at least one processor, may further cause the user equipment apparatus at least to: perform channel estimation based on a PBCH demodulation reference signal (DMRS), where the channel estimation uses DMRS resource elements within the transmission bandwidth of the SSB transmission.

In aspects of the user equipment apparatus, the instructions, when executed by the at least one processor, may further cause the user equipment apparatus at least to: perform at least one of: channel equalization, PBCH demodulation, or PBCH decoding.

In accordance with aspects of the present disclosure, a method includes performing an initial cell search of one or more cells on a network, where performing the initial cell search includes scanning for a plurality of synchronization signal blocks (SSB) transmissions corresponding to a plurality of synchronization raster points; receiving an SSB transmission of the plurality of SSB transmissions, where the SSB transmission is associated with a synchronization raster point of the plurality of synchronization raster points and with a transmission bandwidth, where a size of the transmission bandwidth is based on location of the synchronization raster point in a band having at least a first region and a second region, and where the SSB transmission includes a physical broadcast channel (PBCH); and determining a PBCH puncturing pattern of a plurality of PBCH puncturing patterns for receiving the PBCH based on the size of the transmission bandwidth. Transmission bandwidths in the band include at least a first size and a second size larger than the first size. The plurality of PBCH puncturing patterns includes at least a first PBCH puncturing pattern and a PBCH second puncturing pattern, where the first PBCH puncturing pattern has a greater amount of puncturing than the second PBCH puncturing pattern.

In aspects of the method, the plurality of PBCH puncturing patterns may include a predefined set of PBCH puncturing patterns.

In aspects of the method, determining the PBCH puncturing pattern includes: determining that the synchronization raster point is in the first region of the band and the size of the transmission bandwidth is the first size; and based on determining that the synchronization raster point is in the first region of the band and the size of the transmission bandwidth is the first size, determining that the PBCH puncturing pattern is the first PBCH puncturing pattern of the plurality of PBCH puncturing patterns.

In aspects of the method, determining the PBCH puncturing pattern includes: determining that the synchronization raster point is in the first region of the band and the size of the transmission bandwidth is the second size; and based on determining that the synchronization raster point is in the first region of the band and the size of the transmission bandwidth is the second size, determining that the PBCH puncturing pattern is the second PBCH puncturing pattern of the plurality of PBCH puncturing patterns.

In aspects of the method, determining the PBCH puncturing pattern includes: determining that the synchronization raster point is in the second region of the band; and based on determining that the synchronization raster point is in the second region of the band, determining that the PBCH puncturing pattern is the second PBCH puncturing pattern of the plurality of PBCH puncturing patterns.

In aspects of the method, determining the PBCH puncturing pattern includes: determining that the synchronization raster point is in the second region of the band and the size of the transmission bandwidth is the second size; and based on determining that the synchronization raster point is in the second region of the band and the size of the transmission bandwidth is the second size, determining that the PBCH puncturing pattern is a third PBCH puncturing pattern of the plurality of PBCH puncturing patterns, where the third PBCH puncturing pattern includes a same amount of puncturing as the second PBCH puncturing pattern but has a different pattern of puncturing than the second PBCH puncturing pattern.

In aspects of the method, determining the PBCH puncturing pattern includes: determining that the synchronization raster point is in the second region of the band and the size of the transmission bandwidth is the first size; and based on determining that the synchronization raster point is in the second region of the band and the size of the transmission bandwidth is the first size, determining that the PBCH puncturing pattern is a fourth PBCH puncturing pattern of the plurality of PBCH puncturing patterns, where the fourth PBCH puncturing pattern includes a same amount of puncturing as the first PBCH puncturing pattern but has a different pattern of puncturing than the first PBCH puncturing pattern.

In aspects of the method, the method further includes: performing channel estimation based on a PBCH demodulation reference signal (DMRS), where the channel estimation uses DMRS resource elements within the transmission bandwidth of the SSB transmission.

In aspects of the method, the method further includes: performing at least one of: channel equalization, PBCH demodulation, or PBCH decoding.

In aspects of the present disclosure, any region of a band referred to herein may be a band region defined in a specification, such as in a 3GPP specification or other specification.

According to some aspects, there is provided the subject matter of the independent claims. Some further aspects are defined in the dependent claims.

## BRIEF DESCRIPTION OF THE DRAWINGS

Some example embodiments will now be described with reference to the accompanying drawings.

FIG. 1 is a diagram of an example embodiment of wireless networking between a network system and a user equipment apparatus (UE), according to one illustrated aspect of the disclosure;

FIG. 2 illustrates an example embodiment of components of a user equipment apparatus or of a network apparatus, according to one illustrated aspect of the disclosure;

FIG. 3 illustrates a diagram of an example of a Signal Synchronization Block (SSB), according to one illustrated aspect of the disclosure;

FIG. 4 illustrates an example of channels and raster points, according to one illustrated aspect of the disclosure;

FIG. 5 illustrates an example of 3 MHz channels and raster points, according to one illustrated aspect of the disclosure;

FIG. 6 illustrates an example of synchronization raster points usable by 3 MHz channels and of legacy synchronization raster points, according to one illustrated aspect of the disclosure;

FIG. 7 illustrates examples of puncturing patterns for a 13-physical resource block (PRB) SSB transmission, according to one illustrated aspect of the disclosure;

FIG. 8 illustrates examples of puncturing patterns for a 15-PRB SSB transmission, according to one illustrated aspect of the disclosure;

FIG. 9 illustrates examples of puncturing patterns for SSB transmission near a lower band edge, according to one illustrated aspect of the disclosure;

FIG. 10 illustrates examples of puncturing patterns for SSB transmission near a higher band edge, according to one illustrated aspect of the disclosure;

FIG. 11 illustrates examples of puncturing patterns for a puncturing operation, according to one illustrated aspect of the disclosure; and

FIG. 12 is a flow diagram of an example user equipment operation, according to one illustrated aspect of the disclosure.

## DETAILED DESCRIPTION

In the following description, certain specific details are set forth in order to provide a thorough understanding of disclosed aspects. However, one skilled in the relevant art will recognize that aspects may be practiced without one or more of these specific details or with other methods, components, materials, etc. In other instances, well-known structures associated with transmitters, receivers, or transceivers have not been shown or described in detail to avoid unnecessarily obscuring descriptions of the aspects.

Reference throughout this specification to "one aspect" or "an aspect" means that a particular feature, structure, or characteristic described in connection with the aspect is included in at least one aspect. Thus, the appearances of the phrases "in one aspect" or "in an aspect" in various places throughout this specification are not necessarily all referring to the same aspect. Furthermore, the particular features, structures, or characteristics may be combined in any suitable manner in one or more aspects.

Embodiments described in the present disclosure may be implemented in wireless networking apparatuses, such as, without limitation, apparatuses utilizing Worldwide Interoperability for Microwave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, enhanced LTE (eLTE), 5G New Radio (5GNR), 5G Advanced (i.e. NR Rel-18 and beyond), and 802.11ax (Wi-Fi 6), among other wireless networking systems. The term 'eLTE' here denotes the LTE evolution that connects to a 5G core. LTE is also known as evolved UMTS terrestrial radio access (EUTRA) or as evolved UMTS terrestrial radio access network (EUTRAN).

Aspects of the present disclosure relate to synchronization signal block (SSB) transmissions and receipt of SSB transmissions. Aspects of the present disclosure provide various advantages, including flexibility in use of different transmission bandwidths for SSB transmission, and the transmission bandwidth and an SSB transmission can be detected without additional signaling overhead.

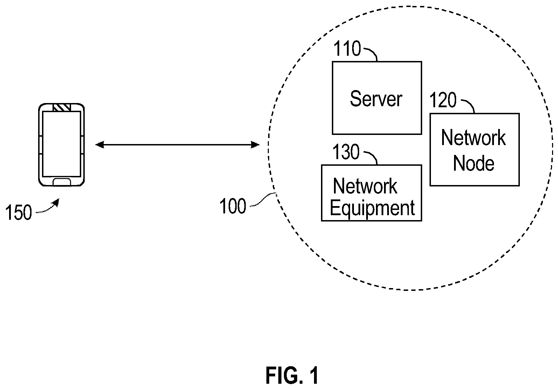

FIG. 1 is a diagram depicting an example of wireless networking between a network system 100 and a user equipment apparatus (UE) 150. The network system 100, for example, may include one or more network nodes 120, one or more servers 110, and/or one or more network equipment 130 (e.g., test equipment). As used herein, the term "network apparatus" may refer to any component of the network system 100, such as the server 110, the network node 120, the network equipment 130, any component(s) of the foregoing, and/or any other component(s) of the network system 100. Examples of network apparatuses include, without limitation, apparatuses implementing 5G NR and apparatuses implementing Wi-Fi 6, among others. The present disclosure describes embodiments related to 5GNR and embodiments that involve aspects defined by 3rd Generation Partnership Project (3GPP). With respect to such embodiments, the network node 120 may be a gNodeB (also known as gNB). However, it is contemplated that embodiments relating to other wireless networking technologies are encompassed within the scope of the present disclosure.

In radio communications, a node may be implemented, at least partly, by a centralized unit, CU, (e.g., server or host), that is operationally coupled to one or more distributed units, DU, (e.g., a radio head). In embodiments, it is possible that node operations may be distributed among multiple centralized units (e.g., servers or hosts). In embodiments, a network node in 5G wireless networking may be implemented based on a so-called CU-DU split. In embodiments, a processing task may be performed in either the CU or the DU, and the shifting of responsibility between the CU and the DU may be configurable according to a particular implementation.

With continuing reference to FIG. 1, in the example of a 5G NR network, the network system 100 provides a cell, which defines a coverage area of the network system 100. As described above, the network system 100 may include a gNB of a 5G NR network or may include any other apparatus configured to control radio communication and manage radio resources within a cell. As used herein, the term "resource" may refer to radio resources, such as a resource block (RB), a physical resource block (PRB), a radio frame, a subframe, a time slot, a sub-band, a frequency region, a subcarrier, a beam, etc. In embodiments, the network node 120 may be called a base station. The terms "resource block" and "physical resource block" may be used interchangeably herein.

The UE 150 may include, but is not limited to, a smartphone, a tablet, portable computers, vehicle-mounted wireless terminal devices, an Internet of Things (IoT) device, and/or a watch or other wearable device, among others. The network system 100 may provide the UE 150 with wireless access to other networks, such as the Internet. The wireless access may include downlink (DL) communication from the network system 100 to the UE 150 and uplink (UL) communication from the UE 150 to the network system 100. As used herein, the terms "transmission" and/or "reception" may refer to, respectively, wirelessly transmitting and/or receiving via a wireless propagation channel on radio resources. There may be other UE in the cell, and each of them may be serviced by the same or by different network node apparatuses, such as network system 100.

FIG. 1 provides an example and is merely illustrative of a network system 100 and a UE 150. Persons skilled in the art will understand that the network system 100 includes components not illustrated in FIG. 1 and will understand that other user equipment apparatuses may be in communication with the network system 100.

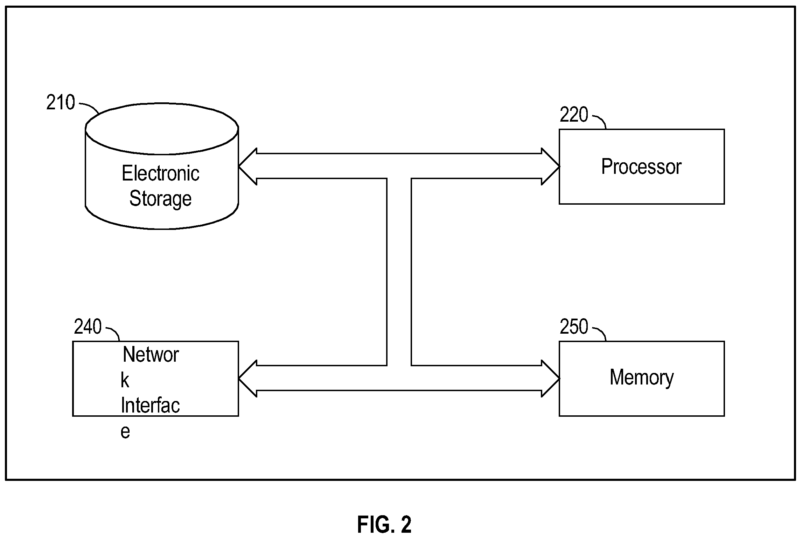

Referring now to FIG. 2, there is shown a block diagram of example components of a UE or a network apparatus. The apparatus includes an electronic storage 210, a processor 220, a memory 250, and a network interface 240. The various components may be communicatively coupled with each other. The processor 220 may be and may include any type of processor, such as a single-core central processing unit (CPU), a multi-core CPU, a microprocessor, a digital signal processor (DSP), a System-on-Chip (SoC), or any other type of processor. The memory 250 may be a volatile type of memory, e.g., RAM, or a nonvolatile type of memory, e.g., NAND flash memory. The memory 250 includes processor-readable instructions that are executable by the processor 220 to cause the apparatus to perform various operations, including those mentioned herein.

The electronic storage 210 may be and include any type of electronic storage used for storing data, such as hard disk drive, solid state drive, and/or optical disc, among other types of electronic storage. The electronic storage 210 stores processor-readable instructions for causing the apparatus to perform its operations and stores data associated with such operations, such as storing data relating to 5G NR standards, among other data. The network interface 240 may implement wireless networking technologies such as 5GNR, Wi-Fi 6, and/or other wireless networking technologies.

The components shown in FIG. 2 are merely examples, and persons skilled in the art will understand that an apparatus includes other components not illustrated and may include multiples of any of the illustrated components. Such and other embodiments are contemplated to be within the scope of the present disclosure.

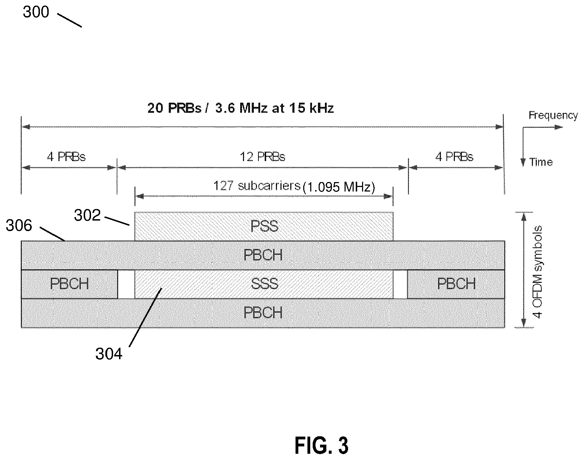

Referring to FIG. 3, an example of a 5G NR synchronization signal block (SSB) 300 is shown. In the example, the SSB 300 includes a primary synchronization signal (PSS) 302, a secondary synchronization signal (SSS) 304, and a Physical Broadcast Channel (PBCH) 306. SSBs are transmitted by a network system (e.g., 100, FIG. 1) in a preconfigured manner, and a UE (e.g., 150, FIG. 1) scans for the SSBs. The SSB 300 are used by a UE for acquiring time and frequency synchronization with a network system and may be used for reference signal received power (RSRP) and reference signal received quality (RSRQ) measurements.

A UE searches for PSS 302 and SSS 304 and decodes the PBCH to obtain time and frequency synchronization to a cell. The SSB 300 is transmitted across various frequencies and over time. The frequency bandwidth used for an SSB transmission can be described in terms of frequency bandwidth allotted to what is referred to as "physical resource blocks" (PRBs), which may also be referred to as "resource blocks" (RBs). In the example where subcarrier spacing (SCS) is 15 kHz, each PRB corresponds to twelve subcarriers (i.e., 180 kHz). In 5G NR, the PBCH 306 uses 20 PRBs (i.e., uses 3.6 MHz). The PSS 302 and the SSS 304 each occupy slightly less than 11 PRBs (each occupies 127 subcarriers, corresponding to 1.905 MHz), but 12 PRBs are allocated for transmitting the PSS 302 and the SSS 304, as shown in FIG. 3. The time usage for SSB can be described in terms of time allotted for one orthogonal frequency division multiplexing (OFDM) symbol. The SSB 300 is transmitted over a time duration corresponding to four OFDM symbols.

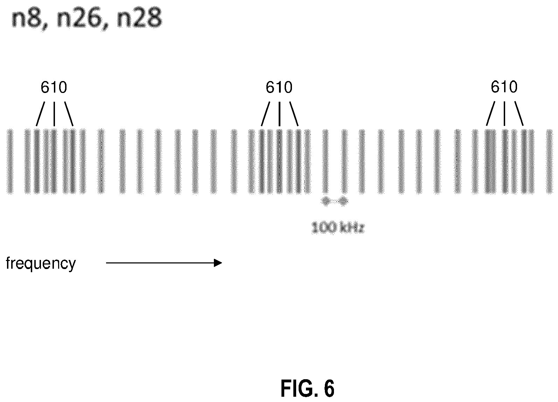

Multiple SSBs are transmitted by a network system in pre-defined bursts over time and over a set of possible frequency locations on which each SSB 300 may be centered. The time between bursts is referred to as "burst periodicity." The set of possible frequencies is referred to as a synchronization raster, and each possible frequency is referred to as a synchronization raster point. The synchronization raster defines the set of frequencies at which each SSB 300 may be transmitted by a network system, thereby setting the frequency positions that a UE should scan to receive SSB transmissions. Synchronization raster will be described in more detail below in connection with FIG. 6-FIG. 8.

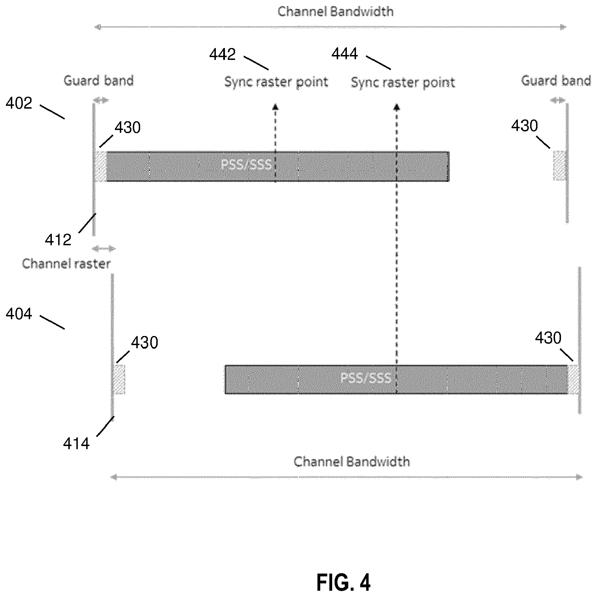

FIG. 4 shows an example of channels and raster points. The illustration of FIG. 4 is not drawn to scale. The example illustrates two channels 402, 404. A channel raster defines reference frequencies that can be used to identify channel positions of uplink channels from a UE to a network system and of downlink channels from a network system to a UE. In the example of FIG. 4, the first channel 402 has a band edge 412, and the second channel 404 has a band edge 414. The first channel band edge 412 and the second channel band edge 414 are spaced apart by a defined amount, which is the channel raster amount. For example, in 5G NR, the channel raster points for the n8, n26 and n28 bands are 100 kHz apart, so that band edges 412, 414 are spaced apart by 100 kHz. The channels 402, 404 have a channel bandwidth and also have defined guard bands 430 at their channel edges. In 5G NR, for bands n8, n26 and n28, the channel bandwidth may be 5 MHz, 10 MHz, or 15 MHz, among other bandwidths. Within the guard bands 430, a channel is not usable for transmission and reception of control data and/or user data. Between the guard bands 430, a channel is usable for transmission and reception of control data and/or user data.

As mentioned above, the synchronization raster indicates the frequency positions at which SSBs can be transmitted and scanned, when explicit signaling of the SSB positions is not present. FIG. 4 illustrates examples of two synchronization raster points 442, 444. The synchronization raster points 442, 444 may be offset from the channel raster points (not shown), which define the middle of their respective channels 402, 404. Synchronization raster points will be described in more detail below in connection with FIG. 6-FIG. 8.

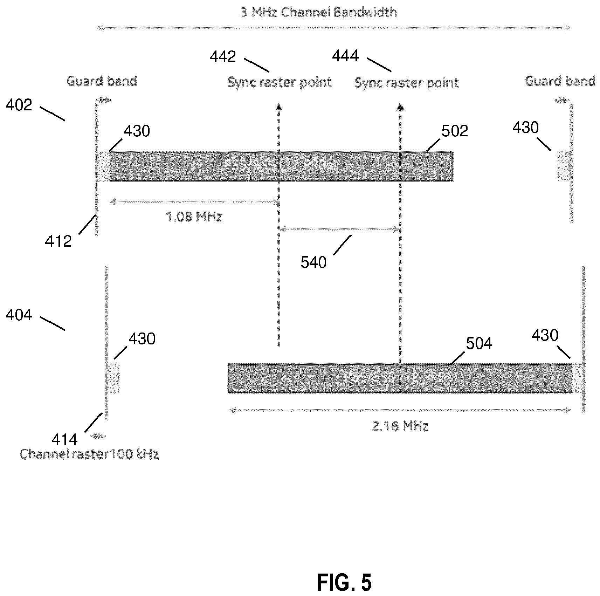

In accordance with aspects of the present disclosure, the present disclosure addresses wireless networks where the bandwidth for transmitting an SSB may be less than that shown in FIG. 3; i.e., less than 20 PRBs (3.6 MHz, for SCS=15 kHz). An effect of narrower SSB transmission bandwidth is that synchronization raster points would be different from those for larger transmission bandwidths. Various considerations for SSB transmission bandwidths and for synchronization raster points are discussed in connection with FIG. 5.

FIG. 5 shows an example of channels and synchronization raster points for a channel bandwidth of 3 MHz and an SSB transmission bandwidth of 12 PRBs (2.16 MHz, for SCS=15 kHz). The example of FIG. 5 illustrates how far apart the SSB transmissions for two adjacent 3 MHz bandwidth channels can be without changing the PRBs allocated for the PSS 302 and the SSS 304 of FIG. 3; i.e., leaving 12 PRBs (2.16 MHz) for PSS 302 and SSS 304.

In the first channel 402, the PSS/SSS 502 are adjacent to the left-side guard band 430, and in the second channel 404, the PSS/SSS 504 are adjacent the right-side guard band 430. In the illustrated scenario, the synchronization raster point 442 for the first channel and the synchronization raster point 444 for the second channel are separated by an amount 540, which depends on the size of the guard bands. In the example of band n100 in 5G NR, it is assumed that the guard band is 142.5 kHz for a 3 MHz channel bandwidth with 90 % spectrum utilization (SU). Based on such assumptions in FIG. 5, the synchronization raster points 442, 444 are 655 kHz apart.

Based on this observation, an implementation using 3 MHz channel bandwidths cannot fully utilize synchronization raster points defined for 5G NR channels having at least 5 MHz bandwidths. For such 5 MHz bandwidths, 5G NR standards provide, in Frequency Range 1 ("FR1": 0 - 3000 MHz), clusters of three synchronization raster points where the clusters are spaced 1.2 MHz apart and where, within each cluster, the three synchronization raster points are spaced 100 kHz apart. These synchronization raster points for FR1 are expressed as:

$$\text{synchronization raster points} = N * 1200 \text{ kHz} + M * 50 \text{ kHz}, N \in \{1{:}2499\}, M \in \{1,3,5\}.$$

$$(\text{Equation 1})$$

Such synchronization raster points as provided by Equation 1 may be referred to as "legacy" synchronization raster points. If legacy synchronization raster points are used for 3 MHz bandwidth channels, certain 3 MHz channels would not be able to accommodate any 12-PRB SSB transmission.

Also, with respect to band n100 in 5G NR, one can observe that the legacy synchronization raster points, provided by Equation 1, do not provide synchronization raster points to support 3 MHz bandwidth channels in either of the edges of the n100 band when using the same guard bands as 5 MHz bandwidth channels (e.g., 242.5 kHz guard bands). In addition, when assuming guard bands usable for 3 MHz bandwidth channels (e.g., 142.5 kHz guard bands), PSS/SSS can be allocated also to certain channels in the lower part of the n100 band.

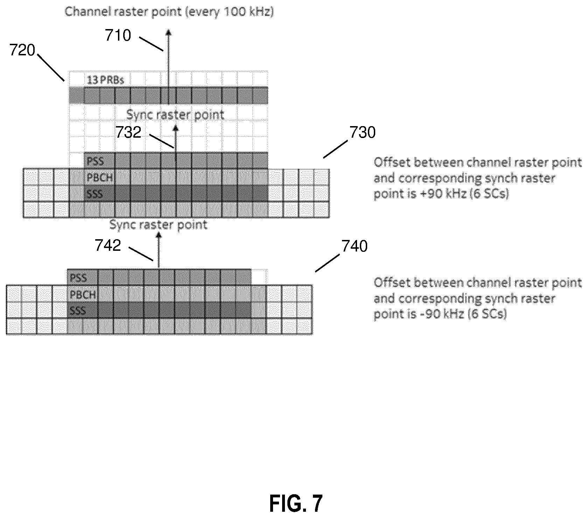

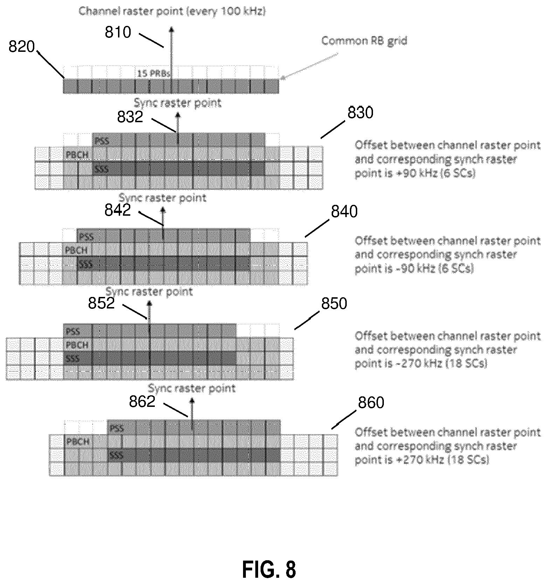

In accordance with aspects of the present disclosure, for 3 MHz bandwidth channels, synchronization raster reference points may be spaced 100 kHz apart. FIG. 6 is a diagram of synchronization raster reference points for certain bands in 5G NR. For bands n8, n26, and n28, legacy synchronization raster points according to Equation 1 are illustrated as lines 610. The other lines illustrate synchronization raster reference points spaced 100 kHz apart for 3 MHz bandwidth channels. As discussed in more detail in connection with FIG. 7 and FIG. 8, the synchronization raster points may be offset from the synchronization raster reference points and may be different from the legacy synchronization raster points. Because the legacy synchronization raster points 610 do not overlap with the other synchronization raster points for 3 MHz bandwidth channels, the two sets of synchronization raster points are compatible with each other, such that a wireless network may accommodate both sets of synchronization raster points to support both 5 MHz channel bandwidths and 3 MHz channel bandwidths.

The following description addresses handling SSB transmissions for 3 MHz channel bandwidths in a manner that provides compatibility with 5 MHz channel bandwidths. In accordance with aspects of the present disclosure, transmissions of PSS and SSS use 12 PRBs, as shown in FIG. 3, regardless of whether a 3 MHz bandwidth channel or a 5 MHz bandwidth channel is used. In the case of a 3 MHz bandwidth channel, SSB transmissions may use a maximum of 15 PRBs (i.e., 2.7 MHz) when using SCS=15 kHz and when 90% spectrum utilization is assumed. Thus, SSB transmissions for a 3 MHz bandwidth channel may have a transmission bandwidth of 12, 13, 14 or 15 PRBs. In contrast, SSB transmissions for a 5 MHz bandwidth channel have a transmission bandwidth of 20 PRBs, as shown in FIG. 3.

In accordance with the present disclosure, to provide the ability for wireless networks to use 20 PRBs for 5 MHz bandwidth channels and to use 12, 13, 14, or 15 PRBs for 3 MHz bandwidth channels, PRB puncturing can be used. In a "puncturing" operation for transmissions, a network system blanks the signals mapped on certain predefined RBs that fall outside the desired transmission bandwidth (i.e., it does not transmit them). Other than puncturing, other aspects of encoding and transmit processing in the wireless network can be kept unchanged. When a UE receives the transmission with punctured PRBs, the UE may null the punctured RBs at the receiver (e.g., setting the log-likelihood ratios (LLRs) to zero in the channel decoder). Otherwise, the UE's receiver processing can be kept unchanged.

Referring again to FIG. 3, in a 3 MHz bandwidth channel, if the SSB transmission bandwidth is 12 PRBs, then 8 PRBs would be punctured - 4 PRBs on each side of the 12 PRBs used for PSS and SSS. If the SSB transmission bandwidth is 13 PRBs, then 7 total PRBs can be punctured in two different ways, which will be described in connection with FIG. 7. Also, for a 13-PRB SSB transmission bandwidth in a 13-PRB channel bandwidth, there are also two different options for defining the synchronization raster point using offsets, as illustrated in FIG. 7. If the SSB transmission bandwidth is 15 PRBs, then 5 total PRBs can be punctured in four different ways, which will be described in connection with FIG. 8. Also, for a 15-PRB SSB transmission bandwidth in a 15-PRB channel bandwidth, there are also four different options for defining the synchronization raster point using offsets, as illustrated in FIG. 8. The case of a 14-PRB SSB transmission is not illustrated, but the same concepts apply. Of note, in embodiments, when using synchronization raster points with 100 kHz raster, i.e., same as channel raster, only a single SSB puncturing pattern would need to be defined for any given SSB transmission bandwidth.

FIG. 7 is a diagram of two puncturing patterns 730, 740 for a 13-PRB SSB transmission in a wireless network that also supports unpunctured 20 PRB SSB transmissions. FIG. 7 shows a channel raster point 710 and a common grid 720 of 13 PRBs usable for the SSB transmission. As described above in connection with FIG. 3, transmission of the PSS and the SSS uses 12 PRBs, which allows two possible configurations for the PSS/SSS PRBs in the 13-PRB common grid 720 and, correspondingly, two possible configurations for the synchronization raster point 732, 742 for the SSB transmission.

In 5G NR, legacy synchronization raster points for FR1 in n8, n26, n28 and n100 bands are offset by 50, 150 or 250 kHz from a channel raster point. In FIG. 7, the offsets are defined differently to provide synchronization raster points 732, 742 that do not overlap with legacy synchronization raster points. In accordance with aspects of the present disclosure, for 13-PRB SSB transmissions, the synchronization raster points may include a +90 kHz offset synchronization raster point 732 or a -90 kHz offset synchronization raster point 742 from the channel raster point 710. Thus, in case of 13-PRB SSB transmissions, the illustrated synchronization raster points 732, 742 provide at least 40 kHz separation from legacy synchronization raster points.

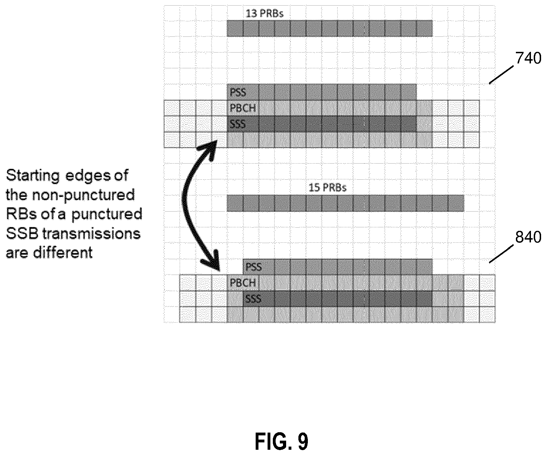

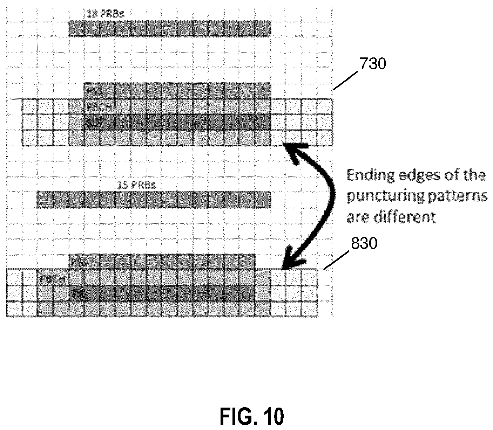

In embodiments, the selection logic for selecting one of the puncturing patterns 730, 740 can select the puncturing pattern that has the largest frequency separation between the corresponding synchronization raster point 732, 742 and legacy synchronization raster points. In embodiments, the selection logic for selecting one of the puncturing patterns 730, 740 can select the puncturing pattern that has more PRBs on the side that is close to an end of a band edge, subject to other considerations, which will be described in connection with FIG. 9 and FIG. 10.

FIG. 8 is a diagram of four puncturing patterns 830, 840, 850, 860 for a 15-PRB SSB transmission in a wireless network that also supports unpunctured 20 PRB SSB transmissions. FIG. 8 shows a channel raster point 810 and a common grid 820 of 15 PRBs usable for the SSB transmission. As described above in connection with FIG. 3, transmission of the PSS and the SSS uses 12 PRBs, which allows four possible configurations for the PSS/SSS PRBs in the 15-PRB common grid 820 and, correspondingly, four possible configurations for the synchronization raster points 832, 842, 852, 862 for the SSB transmission.

As mentioned above, in 5G NR, legacy synchronization raster points for FR1 in n8, n26, n28 and n100 bands are offset by 50, 150 or 250 kHz from a channel raster point. In FIG. 8, the offsets are defined differently to provide synchronization raster points 832, 842, 852, 862 that do not overlap with legacy synchronization raster points. In accordance with aspects of the present disclosure, for 15-PRB SSB transmissions, the synchronization raster points may include a +90 kHz offset synchronization raster point 832, a -90 kHz offset synchronization raster point 842, a -270 kHz offset synchronization raster point 852, and a +270 kHz offset synchronization raster point 862, from the channel raster point 810. Thus, in case of 15-PRB SSB transmissions, the illustrated synchronization raster points 832, 842, 852, 862 provide at least 20 kHz separation from legacy synchronization raster points.

In embodiments, the selection logic for selecting one of the puncturing patterns 830, 840, 850, 860 can select the puncturing pattern that has the largest frequency separation between the corresponding synchronization raster point 832, 842, 852, 862 and legacy synchronization raster points. In embodiments, the selection logic for selecting one of the puncturing patterns 830, 840, 850, 860 can select the puncturing pattern that has more PRBs on the side that is close to an end of a band edge, subject to other considerations, which will be described in connection with FIG. 9 and FIG. 10.

As mentioned above, in embodiments, the selection logic for selecting a puncturing pattern can select the puncturing pattern that has more PRBs on the side that is close to an end of a band edge, and subject to other considerations. FIG. 9 is a diagram of puncture patterns for a 13-PRB SSB transmission and for 15-PRB SSB transmission when the SSB transmission is in the lower end of a band. In such scenario, a further consideration is that, among the puncturing patterns 740, 840 for different SSB transmission bandwidths, the starting edges of the non-punctured PRBs for in the puncturing patterns 740, 840 are different relative to the PSS/SSS location. A balancing of these considerations is used to select the best puncturing patterns 740, 840 for the different SSB transmission bandwidths.

FIG. 10 is a diagram of puncture patterns for a 13-PRB SSB transmission and for 15-PRB SSB transmission when the SSB transmission is in the higher end of a band. In such scenario, a further consideration is that, among the puncturing patterns 730, 830 for different SSB transmission bandwidths, the ending edges of the non-punctured PRBs for in the puncturing patterns 730, 830 are different relative to the PSS/SSS location. A balancing of these considerations is used to select the best puncturing patterns 730, 840 for the different SSB transmission bandwidths.

In other words, as shown by FIG. 9 and FIG. 10, the PSS/SSS location relative to the band edge defines the transmission bandwidth of the punctured SSB as well as the puncturing pattern on both sides of the SSB.

The puncturing patterns described herein may be used in various embodiments, some of which are described below.

In an embodiment:

- When two or more SSB transmission bandwidths are available, a narrower punctured SSB transmission can take place only in the region next to band edge.
- There is a limited set of predefined puncturing patterns.
- In the lower end region of a band, the starting edges of the non-punctured PRBs of punctured SSB transmissions of different bandwidths are different relative to the PSS/SSS location, e.g., as shown in FIG. 9.
- In the higher end region of a band, the ending edges of non-punctured PRBs of punctured SSB transmissions of different bandwidths are different relative to the PSS/SSS location, e.g., as shown in FIG. 10. (The various regions may be defined in a specification, such as in a 3GPP specification or other specification.)

In an embodiment, the puncturing patterns of both 15-PRB and 13-PRB punctured SSB transmissions, or of 12-PRB punctured SSB transmissions, are defined based on the location of the SSB within the band. For example, five cases may be:

- Puncturing pattern 740 (in FIG. 9) when the SSB transmission is located at the lower band edge region. This can be used if the transmission bandwidth is 13 PRBs.
- Puncturing pattern 840 (in FIG. 9) when the SSB is located at the lower band edge region. This can be used if the transmission bandwidth is 15 PRBs and the lowest PBCH PRB is at the lower band edge.

- Puncturing pattern 740 (in FIG. 9) or puncturing pattern 830 (in FIG. 10) or, when the SSB transmission is located in the middle region of the band, where the choice between the two is predefined.
- Puncturing pattern 830 (in FIG. 10) when the SSB is located at upper band edge region. This can be used if the transmission bandwidth is 15 PRBs and the highest PBCH PRB is at the upper band edge.
- Puncturing pattern 730 (in FIG. 10) when the SSB is located at the upper band edge region. This can be used if the transmission bandwidth is 13 PRBs. (The various regions may be defined in a specification, such as in a 3GPP specification or other specification.)

In an embodiment, the puncturing patterns of both 15-PRB and 13-PRB punctured SSB transmissions, or of 12-PRB punctured SSB transmissions, are defined based on the location of the SSB in the band. For example, where two regions are defined (e.g., in a 3GPP specification or other specification):

- On the lower half region of the band, the puncturing patterns follow the ones described in FIG. 9. In the 12-PRB SSB transmission case, the PRBs for PBCH are the same as those for PSS/SSS.
- On the higher half region of the band, the puncturing patterns follow the ones described in FIG. 10. In the 12-PRB case the RBs for PBCH are the same as those for PSS/SSS
- In case the network system can transmit either 12-PRB or 13-PRB SSB transmissions on the band edge(s), PBCH contains verification info on which bandwidth (12/13 PRBs) was used.

In an embodiment:

- Puncturing patterns for 13-PRB SSB transmissions are supported only on the edges of the band (one pattern at the low end and the other pattern at the high end).
- In a variation, a puncturing pattern for 13-PRB SSB transmissions is supported only on the lower edge of the band.
- In a variation, a puncturing pattern for 13-PRB SSB transmissions is supported only on the higher edge of the band.

In an embodiment, the same puncturing pattern for 13-PRB SSB transmissions (e.g., either 730 or 740, FIG. 7) is supported only on the edges of the band, both at the at the low end and at the high end.

- In embodiments, the puncturing pattern differs on both ends from the wider 15-PRB puncturing pattern at least in terms of the frequency difference between consecutive synchronization raster points. (This way, the 13-PRB puncturing pattern can use a synchronization raster point that is not possible to use with the wider 15-PRB puncturing pattern. For example, synchronization raster point is so close to the band edge that wider SSB transmission cannot fit, then narrower transmission bandwidth can be assumed (e.g., 13 RB).)

In an embodiment:

- There are two (or more) SSB transmission bandwidths and the narrower punctured SSB transmission can take place only in the region of band edges.
- There is a limited set of predefined puncturing patterns. In embodiments, for each synchronization raster point, multiple (e.g., two) channel raster points are associated with different frequency offsets to a synchronization raster point. For each frequency offset, there is a corresponding PBCH puncturing pattern.
- In the end of the band, the puncturing patterns for the punctured SSB transmissions of different bandwidths are different relative to the PSS/SSS location.

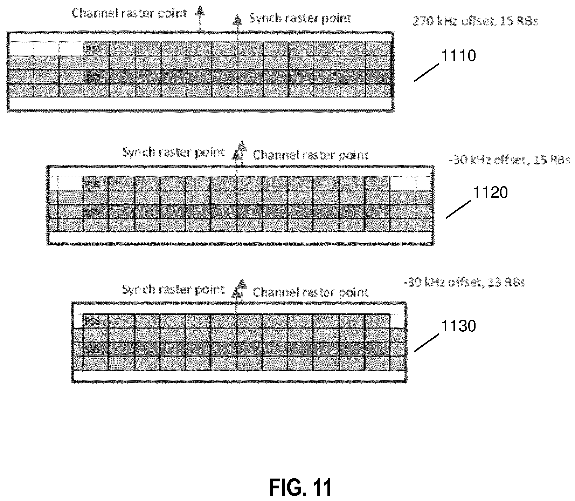

  ○ In embodiments, different puncturing patterns for different bandwidths are only for one of the frequency offsets, while the same puncturing pattern (and bandwidth) is used for other frequency offsets. An example is shown in FIG. 11, with two different puncturing patterns for -30 kHz offset, and a single puncturing pattern for 270 kHz offset. For this example:

    - PSS/SSS detected on synchronization raster point at the lower edge of band: UE tests the 13-PRB pattern 1130 for -30 kHz offset (no need to test the 270 kHz offset pattern 1110, as that would exceed the band).
    - PSS/SSS detected on synchronization raster point at the higher edge of band: UE tests the 13-PRB pattern 1130 for -30 kHz offset and the 15-PRB pattern for 270 kHz offset 1110.
    - On other PSS/SSS locations, UE tests patterns 1110 and 1120.

  ○ In embodiments, different puncturing patterns for different bandwidths are for different frequency offsets.

- For example, there can be two different puncturing patterns for -30 kHz offset, and another two puncturing patterns for 270 kHz offset.
- For PSS/SSS detected on synchronization raster point at the edge of band: UE tests for each frequency offset the widest puncturing pattern (associated to the frequency offset) that results in punctured PBCH still completely within the band and not in guard band. (PBCHs extending to guard band are not tested.)
- On other PSS/SSS locations: UE tests the widest patterns associated for the frequency offsets.

In an embodiment of a UE operation (e.g., UE 150 of FIG. 1):

1. UE searches for the PSS/SSS on a band from one or multiple synchronization raster points.
2. UE detects PSS/SSS on the band (band is divided for instance into three regions):

a. If the PSS/SSS is detected on the lower region of the band, and on a synchronization raster point that allows only a 13-PRB SSB transmission, the UE assumes SSB transmission according to 740, FIG. 9.
b. If the PSS/SSS is detected on the lower region of the band, and on a synchronization raster point that allows a 15-PRB SSB transmission, the UE assumes SSB transmission according to 840, FIG. 9.
c. If the PSS/SSS is detected on the middle region of the band, the UE assumes SSB transmission according to 840, FIG. 9.
d. If the PSS/SSS is detected on the higher region of the band, and on a synchronization raster point that allows a 15-PRB SSB transmission, the UE assumes SSB transmission according to 830, FIG. 10.
e. If the PSS/SSS is detected on the higher region of the band and on a synchronization raster point that allows only a 13-PRB SSB transmission, the UE assumes SSB transmission according to 730, FIG. 10.

3. UE performs channel estimation based on a PBCH demodulation reference signal (DMRS), where the UE uses DMRS resource elements included within the not punctured SSB transmission bandwidth determined in the previous step.
4. UE performs channel equalization, PBCH demodulation, and/or PBCH decoding.

In an embodiment of a network apparatus operation (e.g., network apparatus of network system 100 of FIG. 1):

1. Network apparatus configures a narrowband NR channel (e.g., 3 MHz channel) in a band.
2. Network apparatus selects a synchronization raster point (subcarrier aligned with the channel raster point) and transmits PSS/SSS.
3. Network apparatus prepares SSB transmission and punctures the transmission according to the following options:

a. If the PSS/SSS is located on the lower region of the band and on a synchronization raster point that allows only a 13-PRB SSB transmission, the network apparatus transmits SSB according to 740, FIG. 9.
b. If the PSS/SSS is located on the lower region of the band, and on a sync raster point that allows a 15-PRB SSB transmission, the network apparatus transmits SSB according to 840, FIG. 9.
c. If the PSS/SSS is located on the middle region of the band, and on a synchronization raster, the network apparatus transmits SSB according to 840, FIG. 9.
d. If the PSS/SSS is located on the higher region of the band, and on a synchronization raster point that allows a 15-PRB SSB transmission, the network apparatus transmits SSB according to 830, FIG. 10.
e. If the PSS/SSS is located on the higher region of the band, and on a synchronization raster point that allows only a 13-PRB SSB transmission, the network apparatus transmits SSB according to 730, FIG. 10.

In an embodiment of a UE operation (e.g., UE 150 of FIG. 1):

1. UE searches for the PSS/SSS.
2. UE detects PSS/SSS and determines that it is on synchronization raster point belonging to a synchronization raster grid used for punctured SSBs.
3. For each channel raster point / synchronization raster point frequency offset, UE selects the widest valid (i.e., punctured PBCH is not extending to guard band) puncturing pattern from the PBCH puncturing patterns predetermined for that frequency offset.
4. UE performs channel estimation based on PBCH DMRS where the UE uses DMRS resource elements included within the 13-PRB not punctured transmission bandwidth.
5. UE performs channel equalization, PBCH demodulation, and/or PBCH decoding based on the 13-PRB SSB transmission bandwidth assumption.

In an embodiment of a network apparatus operation (e.g., network apparatus of network system 100 of FIG. 1):

1. Network apparatus decides to locate a 13-PRB SSB transmission in channel on low end region of the band.
2. Network apparatus selects the lowest synchronization raster point and transmits PSS/SSS.
3. Network apparatus selects the lowest or second lowest channel raster point and determines the frequency offset between channel raster point and synchronization raster point. Network apparatus prepares SSB transmission and punctures the transmission according to the widest valid puncturing pattern corresponding to the frequency offset.

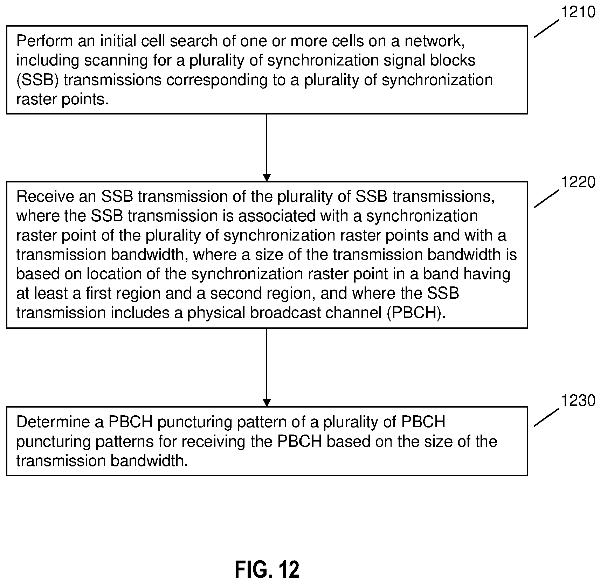

An embodiment of a UE operation (e.g., UE 150, FIG. 1) is shown in FIG. 12. At block 1210, the operation involves performing an initial cell search of one or more cells on a network, including scanning for a plurality of synchronization signal blocks (SSB) transmissions corresponding to a plurality of synchronization raster points. At block 1220, the operation involves receiving an SSB transmission of the plurality of SSB transmissions, where the SSB transmission is associated with a synchronization raster point of the plurality of synchronization raster points and with a transmission bandwidth, where the size of the transmission bandwidth is based on location of the synchronization raster point in a band having at least a first region and a second region, and where the SSB transmission includes a physical broadcast channel (PBCH). At block 1230, the operation involves determining a PBCH puncturing pattern of a plurality of PBCH puncturing patterns for receiving the PBCH based on the size of the transmission bandwidth.

The embodiments described above are within the scope of the present disclosure. Any embodiments that are not exclusive of each other may be combined and used together. Such combinations are contemplated to be within the scope of the present disclosure.

Aspects of the present disclosure provide various advantages, including flexibility in use of different transmission bandwidths for SSB transmission, and the transmission bandwidth and an SSB transmission can be detected without additional signaling overhead.

An advantage is simplicity with acceptable performance. Generally, to limit the impact to other UE procedures such as channel estimation for the PBCH demodulation, it is preferable to perform puncturing with PRB granularity and avoid puncturing of PRB fractions. From a performance viewpoint, straightforward puncturing is not strictly the optimal solution. For example, PBCH in SSB symbol 3 simply repeats (except for 8 bits) the PBCH bits transmitted in SSB symbol 1 almost on the same subcarriers (with subcarrier offset of 5). As a result of puncturing, some codeword bits are not transmitted at all while others are repeated. With an interleaver, the number of different codewords bits actually transmitted on a punctured PBCH could be maximized, improving detection. However, in embodiments, the simplicity and minimized implementation impact of straightforward puncturing outweighs gains achievable with performance optimization, thereby providing the advantage of simplicity with acceptable performance.

Further embodiments of the present disclosure include the following examples.

Example 1. A user equipment apparatus comprising:

means for performing an initial cell search of one or more cells on a network, wherein performing the initial cell search comprises scanning for a plurality of synchronization signal block (SSB) transmissions corresponding to a plurality of synchronization raster points;
means for receiving an SSB transmission of the plurality of SSB transmissions, wherein the SSB transmission is associated with a synchronization raster point of the plurality of synchronization raster points and with a transmission bandwidth, wherein a size of the transmission bandwidth is based on location of the synchronization raster point in a band having at least a first region and a second region, and wherein the SSB transmission comprises a physical broadcast channel (PBCH); and
means for determining a PBCH puncturing pattern of a plurality of PBCH puncturing patterns for receiving the PBCH based on the size of the transmission bandwidth ,
wherein transmission bandwidths in the band comprise at least a first size and a second size larger than the first size, and
wherein the plurality of PBCH puncturing patterns comprises at least a first PBCH puncturing pattern and a second PBCH puncturing pattern, the first PBCH puncturing pattern having a greater amount of puncturing than the second PBCH puncturing pattern.

Example 2. The user equipment apparatus of Example 1, wherein the plurality of PBCH puncturing patterns includes a predefined set of PBCH puncturing patterns.

Example 3. The user equipment apparatus of Example 1 or Example 2, further comprising:

means for determining that the synchronization raster point is in the first region of the band and the size of the transmission bandwidth is the first size; and
means for, based on determining that the synchronization raster point is in the first region of the band and the size

# EP 4 422 108 A1

of the transmission bandwidth is the first size, determining that the PBCH puncturing pattern is the first PBCH puncturing pattern of the plurality of PBCH puncturing patterns.

Example 4. The user equipment apparatus of any one of the preceding Examples, further comprising:

means for determining that the synchronization raster point is in the first region of the band and the size of the transmission bandwidth is the second size; and
means for, based on determining that the synchronization raster point is in the first region of the band and the size of the transmission bandwidth is the second size, determining that the PBCH puncturing pattern is the second PBCH puncturing pattern of the plurality of PBCH puncturing patterns.

Example 5. The user equipment apparatus of any one of the preceding Examples, further comprising:

means for determining that the synchronization raster point is in the second region of the band; and
means for, based on determining that the synchronization raster point is in the second region of the band, determining that the PBCH puncturing pattern is the second PBCH puncturing pattern of the plurality of PBCH puncturing patterns.

Example 6. The user equipment apparatus of any one of the preceding Examples, further comprising:

means for determining that the synchronization raster point is in the second region of the band and the size of the transmission bandwidth is the second size; and
means for, based on determining that the synchronization raster point is in the second region of the band and the size of the transmission bandwidth is the second size, determining that the PBCH puncturing pattern is a third PBCH puncturing pattern of the plurality of PBCH puncturing patterns,
wherein the third PBCH puncturing pattern comprises a same amount of puncturing as the second PBCH puncturing pattern but has a different pattern of puncturing than the second PBCH puncturing pattern.

Example 7. The user equipment apparatus of any one of the preceding Examples, further comprising:

means for determining that the synchronization raster point is in the second region of the band and the size of the transmission bandwidth is the first size; and
means for, based on determining that the synchronization raster point is in the second region of the band and the size of the transmission bandwidth is the first size, determining that the PBCH puncturing pattern is a fourth PBCH puncturing pattern of the plurality of PBCH puncturing patterns,
wherein the fourth PBCH puncturing pattern comprises a same amount of puncturing as the first PBCH puncturing pattern but has a different pattern of puncturing than the first PBCH puncturing pattern.

Example 8. The user equipment apparatus of any one of the preceding Examples, further comprising:
means for performing channel estimation based on a PBCH demodulation reference signal (DMRS), wherein the channel estimation uses DMRS resource elements within the transmission bandwidth of the SSB transmission.
Example 9. The user equipment apparatus of any one of the preceding Examples, further comprising:
means for performing at least one of: channel equalization, PBCH demodulation, or PBCH decoding.
The embodiments and aspects disclosed herein are examples of the disclosure and may be embodied in various forms. For instance, although certain embodiments herein are described as separate embodiments, each of the embodiments herein may be combined with one or more of the other embodiments herein. Specific structural and functional details disclosed herein are not to be interpreted as limiting, but as a basis for the claims and as a representative basis for teaching one skilled in the art to variously employ the present disclosure in virtually any appropriately detailed structure. Like reference numerals may refer to similar or identical elements throughout the description of the figures.
The phrases "in an aspect," "in aspects," "in various aspects," "in some aspects," or "in other aspects" may each refer to one or more of the same or different aspects in accordance with this disclosure. The phrase "a plurality of" may refer to two or more.
The phrases "in an embodiment," "in embodiments," "in various embodiments," "in some embodiments," or "in other embodiments" may each refer to one or more of the same or different embodiments in accordance with the present disclosure. A phrase in the form "A or B" means "(A), (B), or (A and B)." A phrase in the form "at least one of A, B, or C" means "(A); (B); (C); (A and B); (A and C); (B and C); or (A, B, and C)."
Any of the herein described methods, programs, algorithms or codes may be converted to, or expressed in, a programming language or computer program. The terms "programming language" and "computer program," as used herein, each include any language used to specify instructions to a computer, and include (but is not limited to) the following languages and their derivatives: Assembler, Basic, Batch files, BCPL, C, C+, C++, Delphi, Fortran, Java, JavaScript, machine code, operating system command languages, Pascal, Perl, PL1, Python, scripting languages, Visual Basic, metalanguages which themselves specify programs, and all first, second, third, fourth, fifth, or further generation computer languages. Also included are database and other data schemas, and any other metalanguages. No distinction is made between languages which are interpreted, compiled, or use both compiled and interpreted approaches. No distinction is made between compiled and source versions of a program. Thus, reference to a program, where the programming language could exist in more than one state (such as source, compiled, object, or linked) is a reference to any and all such states. Reference to a program may encompass the actual instructions and/or the intent of those instructions.

While aspects of the disclosure have been shown in the drawings, it is not intended that the disclosure be limited thereto, as it is intended that the disclosure be as broad in scope as the art will allow and that the specification be read likewise. Therefore, the above description should not be construed as limiting, but merely as exemplifications of particular aspects. Those skilled in the art will envision other modifications within the scope and spirit of the claims appended hereto.

**Claims**

1. A user equipment apparatus comprising:

   at least one processor; and
   at least one memory storing instructions which, when executed by the at least one processor, cause the user equipment apparatus at least to:

   perform an initial cell search of one or more cells on a network, wherein performing the initial cell search comprises scanning for a plurality of synchronization signal block (SSB) transmissions corresponding to a plurality of synchronization raster points;
   receive an SSB transmission of the plurality of SSB transmissions, wherein the SSB transmission is associated with a synchronization raster point of the plurality of synchronization raster points and with a transmission bandwidth, wherein a size of the transmission bandwidth is based on location of the synchronization raster point in a band having at least a first region and a second region, and wherein the SSB transmission comprises a physical broadcast channel (PBCH); and
   determine a PBCH puncturing pattern of a plurality of PBCH puncturing patterns for receiving the PBCH based on the size of the transmission bandwidth,
   wherein transmission bandwidths in the band comprise at least a first size and a second size larger than the first size, and
   wherein the plurality of PBCH puncturing patterns comprises at least a first PBCH puncturing pattern and a second PBCH puncturing pattern, the first PBCH puncturing pattern having a greater amount of puncturing than the second PBCH puncturing pattern.

2. The user equipment apparatus of claim 1, wherein the plurality of PBCH puncturing patterns comprises a predefined set of PBCH puncturing patterns.

3. The user equipment apparatus of claim 1, wherein in determining the PBCH puncturing pattern, the instructions, when executed by the at least one processor, further cause the user equipment apparatus at least to:

   determine that the synchronization raster point is in the first region of the band and the size of the transmission bandwidth is the first size; and
   based on determining that the synchronization raster point is in the first region of the band and the size of the transmission bandwidth is the first size, determine that the PBCH puncturing pattern is the first PBCH puncturing pattern of the plurality of PBCH puncturing patterns.

4. The user equipment apparatus of claim 1, wherein in determining the PBCH puncturing pattern, the instructions, when executed by the at least one processor, further cause the user equipment apparatus at least to:

   determine that the synchronization raster point is in the first region of the band and the size of the transmission bandwidth is the second size; and
   based on determining that the synchronization raster point is in the first region of the band and the size of the transmission bandwidth is the second size, determine that the PBCH puncturing pattern is the second PBCH puncturing pattern of the plurality of PBCH puncturing patterns.

5. The user equipment apparatus of claim 1, wherein in determining the PBCH puncturing pattern, the instructions, when executed by the at least one processor, further cause the user equipment apparatus at least to:

determine that the synchronization raster point is in the second region of the band; and
based on determining that the synchronization raster point is in the second region of the band, determine that the PBCH puncturing pattern is the second PBCH puncturing pattern of the plurality of PBCH puncturing patterns.

6. The user equipment apparatus of claim 1, wherein in determining the PBCH puncturing pattern, the instructions, when executed by the at least one processor, further cause the user equipment apparatus at least to:

determine that the synchronization raster point is in the second region of the band and the size of the transmission bandwidth is the second size; and
based on determining that the synchronization raster point is in the second region of the band and the size of the transmission bandwidth is the second size, determine that the PBCH puncturing pattern is a third PBCH puncturing pattern of the plurality of PBCH puncturing patterns,
wherein the third PBCH puncturing pattern comprises a same amount of puncturing as the second PBCH puncturing pattern but has a different pattern of puncturing than the second PBCH puncturing pattern.

7. The user equipment apparatus of claim 6, wherein in determining the PBCH puncturing pattern, the instructions, when executed by the at least one processor, further cause the user equipment apparatus at least to:

determine that the synchronization raster point is in the second region of the band and the size of the transmission bandwidth is the first size; and
based on determining that the synchronization raster point is in the second region of the band and the size of the transmission bandwidth is the first size, determine that the PBCH puncturing pattern is a fourth PBCH puncturing pattern of the plurality of PBCH puncturing patterns,
wherein the fourth PBCH puncturing pattern comprises a same amount of puncturing as the first PBCH puncturing pattern but has a different pattern of puncturing than the first PBCH puncturing pattern.

8. The user equipment apparatus of claim 1, wherein the instructions, when executed by the at least one processor, further cause the user equipment apparatus at least to:

perform channel estimation based on a PBCH demodulation reference signal (DMRS),
wherein the channel estimation uses DMRS resource elements within the transmission bandwidth of the SSB transmission.

9. The user equipment apparatus of claim 1, wherein the instructions, when executed by the at least one processor, further cause the user equipment apparatus at least to:
perform at least one of: channel equalization, PBCH demodulation, or PBCH decoding.

10. A method comprising:

performing an initial cell search of one or more cells on a network, wherein performing the initial cell search comprises scanning for a plurality of synchronization signal blocks (SSB) transmissions corresponding to a plurality of synchronization raster points;
receiving an SSB transmission of the plurality of SSB transmissions, wherein the SSB transmission is associated with a synchronization raster point of the plurality of synchronization raster points and with a transmission bandwidth, wherein a size of the transmission bandwidth is based on location of the synchronization raster point in a band having at least a first region and a second region, and wherein the SSB transmission comprises a physical broadcast channel (PBCH); and
determining a PBCH puncturing pattern of a plurality of PBCH puncturing patterns for receiving the PBCH based on the size of the transmission bandwidth,
wherein transmission bandwidths in the band comprise at least a first size and a second size larger than the first size, and
wherein the plurality of PBCH puncturing patterns comprises at least a first PBCH puncturing pattern and a

**EP 4 422 108 A1**

second PBCH puncturing pattern, the first PBCH puncturing pattern having a greater amount of puncturing than the second PBCH puncturing pattern.

11. The method of claim 10, wherein the plurality of PBCH puncturing patterns comprises a predefined set of PBCH puncturing patterns.

12. The method of claim 10, wherein determining the PBCH puncturing pattern comprises:

   determining that the synchronization raster point is in the first region of the band and the size of the transmission bandwidth is the first size; and
   based on determining that the synchronization raster point is in the first region of the band and the size of the transmission bandwidth is the first size, determining that the PBCH puncturing pattern is the first PBCH puncturing pattern of the plurality of PBCH puncturing patterns.

13. The method of claim 10, wherein determining the PBCH puncturing pattern comprises:

   determining that the synchronization raster point is in the first region of the band and the size of the transmission bandwidth is the second size; and
   based on determining that the synchronization raster point is in the first region of the band and the size of the transmission bandwidth is the second size, determining that the PBCH puncturing pattern is the second PBCH puncturing pattern of the plurality of PBCH puncturing patterns.

14. The method of claim 10, wherein determining the PBCH puncturing pattern comprises:

   determining that the synchronization raster point is in the second region of the band; and
   based on determining that the synchronization raster point is in the second region of the band, determining that the PBCH puncturing pattern is the second PBCH puncturing pattern of the plurality of PBCH puncturing patterns.

15. The method of claim 10, wherein determining the PBCH puncturing pattern comprises:

   determining that the synchronization raster point is in the second region of the band and the size of the transmission bandwidth is the second size; and
   based on determining that the synchronization raster point is in the second region of the band and the size of the transmission bandwidth is the second size, determining that the PBCH puncturing pattern is a third PBCH puncturing pattern of the plurality of PBCH puncturing patterns,
   wherein the third PBCH puncturing pattern comprises a same amount of puncturing as the second PBCH puncturing pattern but has a different pattern of puncturing than the second PBCH puncturing pattern.

**15**

FIG. 1

**FIG. 2**

FIG. 3

Channel Bandwidth

442      444

Guard band    Sync raster point   Sync raster point    Guard band

402

430                430

PSS/SSS

412

Channel raster

404

430              430

PSS/SSS

414

Channel Bandwidth

FIG. 4

3 MHz Channel Bandwidth

442    444

Guard band    Sync raster point    Sync raster point    Guard band

402

430    PSS/SSS (12 PRBs)    502    430

1.08 MHz

412

540

404

430    504    430

PSS/SSS (12 PRBs)

414    2.16 MHz

Channel raster 100 kHz

FIG. 5

**FIG. 6**

Channel raster point (every 100 kHz)

710

720

13 PRBs

Sync raster point

732

730

Offset between channel raster point
and corresponding synch raster
point is +90 kHz (6 SCs)

PSS
PBCH
SSS

Sync raster point

742

740

PSS
PBCH
SSS

Offset between channel raster point
and corresponding synch raster
point is -90 kHz (6 SCs)

**FIG. 7**

Channel raster point (every 100 kHz)

810

820

15 PRBs

Common RB grid

Sync raster point
832

830

Offset between channel raster point
and corresponding synch raster
point is +90 kHz (6 SCs)

PSS
PBCH
SSS

Sync raster point
842

840

Offset between channel raster point
and corresponding synch raster
point is -90 kHz (6 SCs)

PSS
PBCH
SSS

Sync raster point
852

850

Offset between channel raster point
and corresponding synch raster
point is -270 kHz (18 SCs)

PSS
PBCH
SSS

Sync raster point
862

860

Offset between channel raster point
and corresponding synch raster
point is +270 kHz (18 SCs)

PSS
PBCH
SSS

FIG. 8

FIG. 9

13 PRBs

730

PSS
PBCH
SSS

15 PRBs

Ending edges of the
puncturing patterns
are different

830

PSS
PBCH
SSS

FIG. 10

Channel raster point ▲    ▲ Synch raster point        270 kHz offset, 15 RBs

| PSS | | | | | | | | | | | | | | |
| SSS | | | | | | | | | | | | | | |

/ 1110

Synch raster point ▲ Channel raster point        -30 kHz offset, 15 RBs

| PSS | | | | | | | | | | | | | | |
| SSS | | | | | | | | | | | | | | |

/ 1120

Synch raster point ▲ Channel raster point        -30 kHz offset, 13 RBs

| PSS | | | | | | | | | | | | | |
| SSS | | | | | | | | | | | | | |

/ 1130

FIG. 11

26

Perform an initial cell search of one or more cells on a network, including scanning for a plurality of synchronization signal blocks (SSB) transmissions corresponding to a plurality of synchronization raster points.

1210

Receive an SSB transmission of the plurality of SSB transmissions, where the SSB transmission is associated with a synchronization raster point of the plurality of synchronization raster points and with a transmission bandwidth, where a size of the transmission bandwidth is based on location of the synchronization raster point in a band having at least a first region and a second region, and where the SSB transmission includes a physical broadcast channel (PBCH).

1220

Determine a PBCH puncturing pattern of a plurality of PBCH puncturing patterns for receiving the PBCH based on the size of the transmission bandwidth.

1230

**FIG. 12**

Europäisches
Patentamt
European
Patent Office
Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/007626 A1 (TIIROLA ESA TAPANI [FI] ET AL) 5 January 2023 (2023-01-05)<br>* paragraph [0038] - paragraph [0042] *<br>----- | 1-15 | INV.<br>H04L5/00<br>H04J11/00<br>H04W48/12<br>H04W48/16<br>H04W56/00 |
| X | TIMO LUNTTILA ET AL: "NR support for below 5 MHz BW",<br>3GPP DRAFT; R1-2212397; TYPE DISCUSSION; NR_FR1_LESSTHAN_5MHZ_BW-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ;<br>,<br>vol. 3GPP RAN 1, no. Toulouse, FR;<br>20221114 - 20221118<br>7 November 2022 (2022-11-07), XP052222956,<br>Retrieved from the Internet:<br>URL:https://www.3gpp.org/ftp/TSG_RAN/WG1_RL1/TSGR1_111/Docs/R1-2212397.zip<br>R1-2212397 NR support for below 5 MHz BW.docx<br>[retrieved on 2022-11-07] | 1,10 | |
| A | * section 3.2 *<br>----- | 2-9, 11-15 | TECHNICAL FIELDS SEARCHED (IPC)<br><br>H04L<br>H04J<br>H04W |

The present search report has been drawn up for all claims

| Place of search | Date of completion of the search | Examiner |
|---|---|---|
| The Hague | 13 June 2024 | de Paz Alberola, R |

**ANNEX TO THE EUROPEAN SEARCH REPORT
ON EUROPEAN PATENT APPLICATION NO.**

EP 24 15 2525

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2024

| Patent document cited in search report | Publication date | Patent family member(s) | | Publication date |
|---|---|---|---|---|
| US 2023007626 A1 | 05-01-2023 | US | 2023007626 A1 | 05-01-2023 |
| | | WO | 2023275430 A1 | 05-01-2023 |

EPO FORM P0459

For more details about this annex : see Official Journal of the European Patent Office, No. 12/82